# EUROPÄISCHE PATENTSCHRIFT

(11) **EP 1 753 576 B1**
(45) Veröffentlichungstag und Bekanntmachung des Hinweises auf die Patenterteilung: **14.11.2007**
(21) Anmeldenummer: 05746352.3
(22) Anmeldetag: 27.05.2005
(51) Int. Cl.: B23C 5/22

(54) **SPANABHEBENDES WERKZEUG UND SCHNEIDEINLAGE FÜR EIN SPANABHEBENDES WERKZEUG**
CUTTING TOOL AND CUTTING INSERT FOR A CUTTING TOOL
OUTIL POUR ENLEVEMENT DE COPEAUX ET INSERT DE COUPE POUR UN OUTIL D'ENLEVEMENT DE COPEAUX

(30) Priorität: 02.06.2004 DE 102004026873
(43) Veröffentlichungstag der Anmeldung: 21.02.2007
(73) Patentinhaber: Nubius Group Präzisionswerkzeuge GmbH, 73037 Göppingen (DE)
(72) Erfinder: FREY, Oskar, 73107 Eschenbach (DE)
(74) Vertreter: Bulling, Alexander
(86) Internationale Anmeldenummer: PCT/EP2005/005760
(87) Internationale Veröffentlichungsnummer: WO 2005/118192

(56) Entgegenhaltungen:
- DE-A1- 4 320 409
- US-A- 1 542 007
- US-A- 1 812 475
- US-A- 5 478 175

## Beschreibung

Die Erfindung betrifft ein spanabhebendes Werkzeug, insbesondere in Fräswerkzeug, mit den Merkmalen des Oberbegriffs des Anspruchs 1. Die Erfindung betrifft auch eine Schneideinlage für ein derartiges Werkzeug.

Beispielsweise ist aus der EP 0 537 476 A1 ein Fräswerkzeug bekannt geworden, das ein Schneideinlagen in Form von Schneidplatten aufweist, die eine zentrale Bohrung für eine Befestigungsschraube der Schneidplatte am Fräskopf des Fräswerkzeuges aufweisen. Bei derartigen Fräswerkzeugen ist problematisch, dass eine starke Schwächung des Materials der Schneidplatten aufgrund der zentralen Bohrung vorliegt.
Außerdem ist aufgrund der einseitigen Belastung der Schneidplatten ein mögliches Kippen der Schneidplatten um die Befestigungsschraube oder gar ein Lösen der Befestigungsschraube möglich. Ein weiterer Nachteil bei derartig bekannten Fräswerkzeugen ist, dass ein exaktes Anbringen der Schneidplatten am Fräskopf nur mit sehr hohem Aufwand möglich ist. Die hochfesten Schneidplatten werden in der Regel durch Sintern hergestellt, wobei beim Sintervorgang der zentrale Durchbruch mitgesintert wird. Eine Oberflächennachbearbeitung des zentralen Durchbruchs ist, wenn überhaupt nur sehr schwer möglich.

Aus der WO 00/37202 ist ein spanabhebendes Werkzeug bekannt geworden, dass in den Grundkörper des Werkzeugs eindrehbare Schneideinlagen aufweist. Die Schneideinlagen weisen dazu auf ihrer der Schneidkante abgewandten Unterseite ein Gewinde oder eine Bajonettnut auf. Auf der Oberseite sehen die Schneideinlagen eine Schraubendreheraufnahme für einen Schneideinlagen eine Schraubendreheraufnahme für einen Schraubendreher zum Verdrehen der Schneideinlagen auf. Durch Vorsehen der Schraubendreheraufnahme an der Oberseite findet eine Materialschwächung in der Schneideinlage statt. Um hochgenaue Toleranzen einhalten zu können, ist es außerdem erforderlich, das Gewinde der Schneideinlagen und das zugehörige Gegengewinde entsprechend hoch exakt auszubilden. Durch eine Verdrehung der Schneideinlage beim Einschrauben in das Grundgehäuse ist zudem darauf zu achten, dass keine Verunreinigungen oder Späne in den Gewindeabschnitten vorhanden sind, die zu Riefen und damit zu Beschädigungen an den Gewinden führen können. Hierdurch wird eine exakte Positionierung der Schneideinlagen am Grundkörper nur erschwert möglich.

Aus der DE 1 256 514 ist ein spanabhebendes Werkzeug bekannt geworden, bei dem Schneideinlagen in Form von Schneidplatten vorgesehen sind. Zur exakten Positionierung der Schneidplatten am Grundkörper ist am Grundkörper ein Drehbar gelagerter Exzenterbolzen vorgesehen, der in eine mittig an der Schneidplatte vorgesehene Durchbrechung eingreift. Die Wandung der Durchbrechung sieht dabei bestimmte Druckflächen vor, gegen die der Exzenterbolzen zur Einspannung der Schneidplatte am Grundkörper wirkt. Dieser Stand der Technik hat insbesondere den Nachteil, dass eine Materialschwächung der Schneidplatte aufgrund der mittigen Durchbrechung für den Exzenterbolzen vorhanden ist.

Aus der DE 43 20 409 A1 ist ein Zerspanungswerkzeug bekannt geworden, bei dem an einer Messerplatte eine Befestigungseinrichtung in Form einer Schnappverriegelung vorgesehen ist. Die Schnappverriegelung weist dabei einen Vorsprung mit einer Verriegelungsfläche auf. Ein derartiges Zerspanungswerkzeug ist nicht dazu geeignet, an der Schneidkante hohe Kräfte aufzunehmen.

Aus der US 5,478,185 A ist eine Scheideinlage bekannt geworden, die drehbar gelagert in eine Aufnahmebuchse einführbar ist. Zu Sicherung der Scheideinlage in der Buchse findet ein Federspannring Verwendung.

Aus der US 1,542,007 ist ein Schneidwerkzeug mit einem Grundköper und mit wenigstens einer an einem Aufnahmeabschnitt des Grundkörpers anordenbaren Schneideinlage bekannt geworden, wobei die Außenkontur der Schneideinlage konisch ausgebildet ist. Die Schneideinlage weist dabei im Bereich ihrer Oberseite eine Schneidkante auf und ist in eine grundköperseitige, sich konisch verjüngende Aufnahme einführbar. Am Grundkörper ist ein Spannstift vorgesehen ist, mit dem die Schneideinlage in die Aufnahme einspannbar ist. Aufgrund der konischen Ausbildung der Scheideinlage zum einen und der Aufnahme zum anderen kann eine exakte Lage der Scheidkante gegenüber dem Grundkörper bzw. eine genaue vorgegebene Einführtiefe der Scheideinlage in die Aufnahme nicht, oder nur sehr aufwändig, eingehalten werden.

Der vorliegenden Erfindung liegt die Aufgabe zugrunde, ein spanabhebendes Werkzeug und eine Schneideinlage für ein spanabhebendes Werkzeug bereit zu stellen, bei dem eine die Kühlung/Schmierung der Schneidkante optimiert wird.

Diese Aufgabe wird mit einem spanabhebenden Werkzeug gelöst, dass die Merkmale des Anspruchs 1 aufweist. Hierdurch kann insbesondere zusammen mit einer entsprechend ausgebildeten Schneideinlage eine optimale Kühlung/Schmierung der Schneidkante erfolgen.
Durch das geradlinige Einführen des Bolzenabschnitts in die Bolzenaufnahme erfolgt kein Verdrehen der Schneideinlage um die Längsachse des Bolzenabschnitts. Insofern sind auf der Oberseite der Schneideinlage keine Aussparungen für einen Schraubendreher oder dergleichen vorzusehen. Da zur Befestigung der Schneideinlage am Grundkörper der Bolzenabschnitt in die Bolzenaufnahme eingeführt wird, sind ferner keine materialschwächenden Durchbrüche der an der Schneideinlage für beispielsweise Befestigungsschrauben vorzusehen. Die gesamte Schneideinlage mit Schneidkante, Oberseite, Unterseite und Bolzenabschnitt kann dabei insbesondere massiv aus einem Material und einstückig hergestellt sein. Vorteilhafterweise wird eine derartige Schneideinlage gesintert, wobei zur Erreichung höherer Genauigkeiten insbesondere der Bolzenabschnitt, durch beispielsweise Schleifen, nachgearbeitet werden kann.

Durch die Verspannung des Bolzenabschnitts mittels dem Spannstift, erfolgt dennoch eine funktionssichere Befestigung der Schneideinlage am Grundkörper. Vorteilhaft ist, dass der Spannstift nicht auf der Oberseite der Schneideinlage angreift, sondern am Bolzenabschnitt, der an der Unterseite der Schneideinlage angeordnet ist. Hierdurch wird der Bereich der Schneideinlage, der die Schneidkante aufweist, durch die Befestigung der Schneideinlage am Grundkörper in keiner Weise beeinflusst. Durch das wenigstens weitgehend formschlüssige Einführen des Bolzenabschnitts in die Bolzenaufnahme kann zudem erreicht werden, dass im Betrieb auf die Schneideinlage wirkende Schneidkräfte sicher, über die Oberfläche des Bolzenabschnitts und die Oberfläche der Bolzenaufnahme in den Grundkörper großflächig abgeleitet werden können.

Eine vorteilhafte Ausgestaltung der Erfindung sieht vor, dass der Spannstift ein Gewinde umfasst, welches in einen quer zu Bolzenaufnahme verlaufenden, sich in die Bolzenaufnahme erstreckenden Gewindeabschnitt einschraubbar ist. Der Spannstift kann dabei als Gewindestift oder auch als Schraube ausgebildet sein, die in den grundkörperseitigen Gewindeabschnitt einschraubbar ist. Das Gewinde des Spannstifts bzw. der Gewindeabschnitt am Grundkörper können dabei so ausgebildet sein, dass eine Selbsthemmung zwischen Spannstift und Gewindeabschnitt eintritt. Hierdurch wird erreicht, dass ein Lösen des Spannstifts beim Betrieb des Werkzeugs nicht möglich ist. Der Spannstift sieht vorteilhafterweise auf seiner der Bolzenaufnahme abgewandten Seite einen Drehabschnitt auf, der zur Aufnahme eines Schraubendrehers dient.

Erfindungsgemäß ist ferner denkbar, dass die Bolzenaufnahme einen runden, ovalen, elliptischen oder eckigen Querschnitt aufweist und dass der Bolzenabschnitt einen zur Bolzenaufnahme komplementären Querschnitt vorsieht. Das Vorsehen eines unrunden Querschnitts hat den Vorteil, dass der Bolzenabschnitt in lediglich vorgegebenen Positionen in die Bolzenaufnahme eingeführt werden kann. Hierdurch ergeben sich vorgebbare Lagen der Schneideinlage. Dabei kann die Schneideinlage beispielsweise verschiedene Schneidkantenabschnitte vorsehen, die je nach Einführen des Bolzenabschnitts in die Bolzenaufnahme zum Eingriff kommen.

Eine weitere Fortbildung der Erfindung zeichnet sich dadurch aus, dass die Fertigungstolleranzen der Paarung Bolzenabschnitt und Bolzenaufnahme so gewählt sind, dass sie als Haftsitz-, Schiebesitz- oder Gleitsitzteile zufammenfügbar sind. Haftsitzteile lassen sich dabei unter geringem Kraftaufwand zusammenfügen. Schiebesitzteile lassen sich bei guter Schmierung von Hand zusammenfügen. Ebenso können Gleitsitzteile bei guter Schmierung von Hand verschoben werden. Als Toleranzfeldkombinationen nach DIN 7157 kommen insbesondere in Betracht: H7/h6, H7/j6, H7/k6. Hierdurch wird ein formschlüssiges weitgehend spaltfreies, geradliniges Einführen des Bolzenabschnitts in die Bolzenaufnahme gewährleistet.

Erfindungsgemäß ist ferner vorteilhaft, der Aufnahmeabschnitt am Grundkörper so ausgebildet ist, dass die Unterseite und/oder Teile der Mantelfläche zwischen der Oberseite und der Unterseite der Schneideinlage im am Grundkörper montierten Zustand wenigstens weitgehend formschlüssig am Aufnahmeabschnitt anliegen. Hierdurch wird gewährleistet, dass beim spanabhebenden Bearbeiten von Werkstücken an der Schneidkante auftretende Kräfte nicht nur über die Paarung Bolzenabschnitt/Bolzenaufnahme abgeleitet werden, sondern auch über die formschlüssige Paarung Unterseite und/oder Mantelfläche der Schneideinlage und Aufnahmeabschnitt. Insbesondere dann, wenn die Unterseite der Schneideinlage im wesentlichen senkrecht zur Längsachse des Bolzenabschnitts verläuft, können besonders vorteilhafte Kräfte übertragen werden.

Die der Erfindung zugrunde liegende Aufgabe wird außerdem gelöst durch eine Schneideinlage für ein erfindungsgemäßes, spanabhebendes Werkzeug. Eine derartige Schneideinalge sieht eine Schneidkante im Bereich der Oberseite vor und weist einen an der der Oberseite abgewandten Unterseite angeordneten Bolzenabschnitt zum geradlinigen Einführen in die grundkörperseitige Bolzenaufnahme vor. Ferner ist vorgesehen, dass die Schneideinlage einen Kanal zur Führung von Kühl- und/oder Schmiermittel aufweist. Der Kanal kann so ausgebildet sein, dass er dort endet, wo vorteilhafterweise Kühl- und/oder Schmiermittel vorzusehen ist.

Der Bolzenabschnitt ist dabei vorteilhafterweise wenigstens weitgehend zylindrisch, und insbesondere kreiszylindrisch ausgebildet.

Wie bereits angesprochen, hat eine derartige Schneideinlage den Vorteil, dass sie keine Materialschwächungen infolge von Durchbrüchen oder Aussparungen vorsieht. Die Schneideinlage kann, wie bereits angesprochen, massiv aus einem Material hergestellt sein.

Vorteilhafterweise kann erfindungsgemäß vorgesehen sein, dass der Bolzenabschnitt einen Anlagebereich zur wenigstens geringfügig formschlüssigen Anlage des freien Endes des Spannstifts aufweist. Hierdurch wird erreicht, dass die Schneideinlage sicher am Grundkörper gehalten wird; ein Lösen oder Herausgleiten der Schneideinlage entlang der Längsachse des Bolzenabschnitts wird hierdurch entgegengewirkt.

Der Anlagebereich kann dabei vorteilhafterweise als rotationssymmetrische Einschnürung ausgebildet sein. Eine derartige Einschnürung lässt sich beispielsweise durch Drehen oder Schleifen herstellen.

Erfindungsgemäß ist allerdings auch vorteilhaft, wenn der Anlagebereich zwei oder mehrere definierte Anlageabschnitte für das freie Ende des Spannstifts derart aufweist, dass die Schneideinlage in zwei oder mehreren unterschiedlichen Drehwinkeln am Grundkörper anordenbar ist. Hierdurch wird sichergestellt, dass ein Verdrehen der Schneideinlage um die Längsachse des Bolzenabschnitts sicher verhindert wird. Außerdem kann die Schneideinlage unter verschiedenen Drehwinkeln am Grundkörper befestigt werden, wodurch sämtliche Abschnitte einer beispielsweise umlaufenden Schneidkante Verwendung finden können.

Dabei ist vorteilhaft, wenn die Schneidkante mehrere Schneidkantenabschnitte aufweist und wenn der Bolzenabschnitt eine entsprechende Anzahl von Anlageabschnitten für das freie Ende des Spannstifts aufweist. Die Schneidkante kann - wie bereits erwähnt - als umlaufende und insbesondere kreisrunde Schneidkante ausgebildet sein. Die Schneidkante kann allerdings auch drei, vier oder mehrere geradlinige oder gekrümmte Schneidkantenabschnitte vorsehen. Je nach Anzahl der zum Einsatz kommenden Schneidkantenabschnitte kann die Schneideinlage dann in entsprechend unterschiedlichen Winkelstellungen am Grundkörper festgesetzt werden.

Dabei ist denkbar, dass der Kanal wenigstens teilweise entlang der Mittellängsachse des Bolzenabschnitts verläuft und an der Oberseite der Schneideinlage endet. In diesem Fall ist vorteilhafterweise ein grundkörperseitiger Kanal vorgesehen, der im Bereich der Bolzenaufnahme und insbesondere in axialer Verlängerung der Bolzenaufnahme endet.

Erfindungsgemäß ist ferner denkbar, dass der Kanal der Schneideinlage innerhalb der Schneideinlage verzweigt ausgebildet ist, und mehrere Öffnungen an der Oberseite der Schneideinlage angeordnet sind. Hierdurch kann eine gleichmäßige Verteilung des Kühl-Schmiermittels an der Oberseite der Schneideinlage erfolgen. Insbesondere dann, wenn die Schneideinlage unter verschiedenen Drehwinkeln am Grundkörper angeordnet werden kann, wird gewährleistet, dass in jeder möglichen Position Kühl- und/oder Schmiermittel an der jeweils zum Eingriff kommenden Schneidkante vorgesehen ist.

Eine weitere, ebenfalls vorteilhafte Ausführung der Erfindung sieht vor, dass die Schneideinlage an ihrer Oberseite eine den Span in vorteilhafterweise abführende Oberflächengeometrie aufweist. Die Oberflächengeometrie ist prinzipiell beliebig gestaltbar, da an der Oberseite, wie bereits angesprochen, keine Durchbrüche oder Aufnahmeabschnitte für Befestigungsschrauben oder Schraubendreher vorzusehen sind. Die Oberflächengeometrie kann beispielsweise als Mulde ausgebildet sein, die den Span wenigstens weitgehend tangential derart führt, dass er vorteilhaft abführbar ist. Innerhalb einer derartigen Mulde kann beispielsweise im zentralen Bereich der Oberseite eine Erhebung vorgesehen sein, um eine stärkere Krümmung des Spans zu erreichen. Andere Oberflächengeometrien sind von der Erfindung ebenfalls erfasst.

Weitere Einzelheiten und vorteilhafte Ausgestaltungen der Erfindung sind der nachfolgenden Beschreibung zu entnehmen, in der die in den Figuren dargestellten Ausführungsbeispiele der Erfindung näher beschrieben und erläutert sind.

Es zeigen:
- Figur 1: ein erfindungsgemäßes spanabhebendes Werkzeug;
- Figur 2a: einen Schnitt durch einen Aufnahmeabschnitt für ein Schneidelement des Werkzeugs gemäß Figur 1;
- Figur 2b: einen Schnitt durch ein Aufnahmeabschnitt einer zweiten Ausführungsform eines erfindungsgemäßen Fräswerkzeugs;
- Figur 3 bis 6: verschiedene Ausführungsformen von erfindungsgemäßen Schneideinlagen.

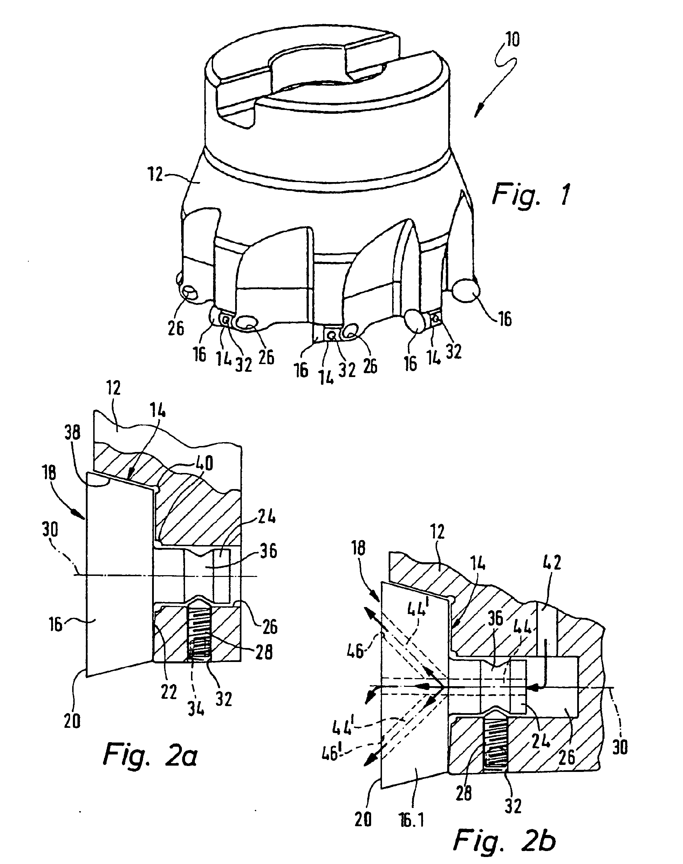

In der Figur 1 ist ein erfindungsgemäßes spanabhebendes Werkzeug 10 in Form eines Stirnfräsers gezeigt. Der Stirnfräser 10 umfasst einen Grundkörper 12 sowie in Aufnahmeabschnitten 14 des Grundkörpers angeordnete Schneideinlagen 16.

In dem parallel zur Stirnfläche des Werkzeugs 10 dargestellten Schnitt durch einen Aufnahmeabschnitt 14 gemäß der Figur 2a wird deutlich, dass die Schneideinlage 16 an ihrer Oberseite 18 eine Schneidkante 20 vorsieht. Auf der der Oberseite abgewandten Unterseite 22 ist an der Schneideinlage 16 ein Bolzenabschnitt 24 angeordnet. Der Bolzenabschnitt verläuft im wesentlichen senkrecht zur Oberseite 18 bzw. zur Unterseite 22 bzw. zu einer von der Schneidkante 20 gebildeten fiktiven Ebene.

Am Grundkörper 12 ist im Bereich des Aufnahmeabschnitts 14 eine Bolzenaufnahme 26 in Form einer Durchgangsbohrung vorgesehen, in welche der Bolzenabschnitt 24 axial, geradlinig einschiebbar ist. Die Fertigungstoleranzen von dem Bolzenabschnitt 24 und der Bolzenaufnahme 26 sind dabei insbesondere so gewählt, dass der Bolzenabschnitt und die Bolzenaufnahme als Haftsitz-, Schiebesitz- oder Gleitsitzteile formschlüssig ineinander fügbar sind.

Am Grundkörper 12 ist ein Spannstift 28 vorgesehen, mit dem der Bolzenabschnitt 24 quer zu seiner Längsachse 30 einspannbar ist. Der Spannstift 28 ist dabei als Gewindestift ausgebildet, der in eine am Grundkörper 12 vorgesehene Gewindebohrung 32 einschraubbar ist. Der Spannstift 28 sieht dabei auf seiner dem Bolzenabschnitt 24 abgewandten Seite einen Drehabschnitt in Form eines Innensechskants 34 zum Einschrauben des Spannstifts 28 in die Gewindebohrung 32 vor.

Der Bolzenabschnitt 24 der Schneideinlage 16 sieht einen als rotationssymmetrische Einschnürung ausgebildeten Anlagebereich 36 für das freie Ende des Spannstifts 28 vor. Das freien Ende des Spannstifts 28 ist dabei weitgehend komplementär zur Oberfläche des Anlagebereichs 36 derart ausgebildet, dass es im wesentlichen formschlüssig im Anlagebereich 36 anliegt. Vorteilhafterweise wird beim Einschrauben des Spannstifts 28 in die Gewindebohrung 32 der Bolzenabschnitt 24 in die Bolzenaufnahme 26 derart eingezogen, dass die Unterseite 22 der Schneideinlage 16 sicher im Aufnahmeabschnitt 14 zum Anliegen kommt.

Dabei ist der Aufnahmeabschnitt 14 so ausgebildet, dass die Unterseite 22 und die Mantelfläche 38 der Schneideinlage 16 wenigstens abschnittsweise weitgehend formschlüssig am Aufnahmeabschnitt 14 anliegt. Um Spannungsspitzen zu vermeiden, sind in den Eck- bzw. Kantbereichen des Aufnahmeabschnitts 14 Abrundungen 40 vorgesehen.

Durch das großflächige Anliegen der Unterseite 22 der Schneideinlage im Aufnahmeabschnitt 14 und durch die formschlüssige Anordnung des Bolzenabschnitts 24 in der Bolzenaufnahme 26 können beim Fräsen auftretende Kräfte von der Schneideinlage 16 optimal in den Grundkörper 12 abgeleitet werden. Die Schneideinlage 16 sieht keinerlei Materialschwächungen vor. Ein Kippen der Schneideinlage 16 in dem Aufnahmeabschnitt 14 ist aufgrund der gewählten Paarung vom Bolzenabschnitt 24 und Bolzenaufnahme 26 ausgeschlossen. Ein Verschieben der Schneideinlage 16 entlang der Längsachse 30 wird durch Vorsehen des Spannstifts 28 sicher verhindert.

Die in der Figur 2b dargestellte Ausführungsform der Erfindung sieht im Gegensatz zu der Ausführungsform gemäß Figur 2a grundkörperseitige Kanäle 42 und schneideinlagenseitige Kanäle 44 für Kühl- und/oder Schmiermittel vor. Die Bolzenaufnahme 26 ist gemäß Figur 2b als Sackloch ausgebildet, in das der grundkörperseitige Kanal 42 endet. Entlang der Längsachse 30 sieht die Schneideinlage 16.1 den Kanal 44 vor, der an der Oberseite 18 der Schneideinlage 16.1 endet. Über den Kanal 42, die Bolzenaufnahme 26 und den Kanal 44 kann folglich Kühl-, Schmiermittel gemäß den Pfeilen in der Figur 2b in den Bereich der Schneideinlage 16.1 bzw. an die Schneidkante 20 transportiert werden. Zur besseren Verteilung des Kühlmittels sieht der schneideinlagenseitige Kühlmittelkanal 44 Abzweigungen 44' vor, die in entsprechenden Öffnungen 46 an der Oberseite 18 der Schneideinlage 16 enden.

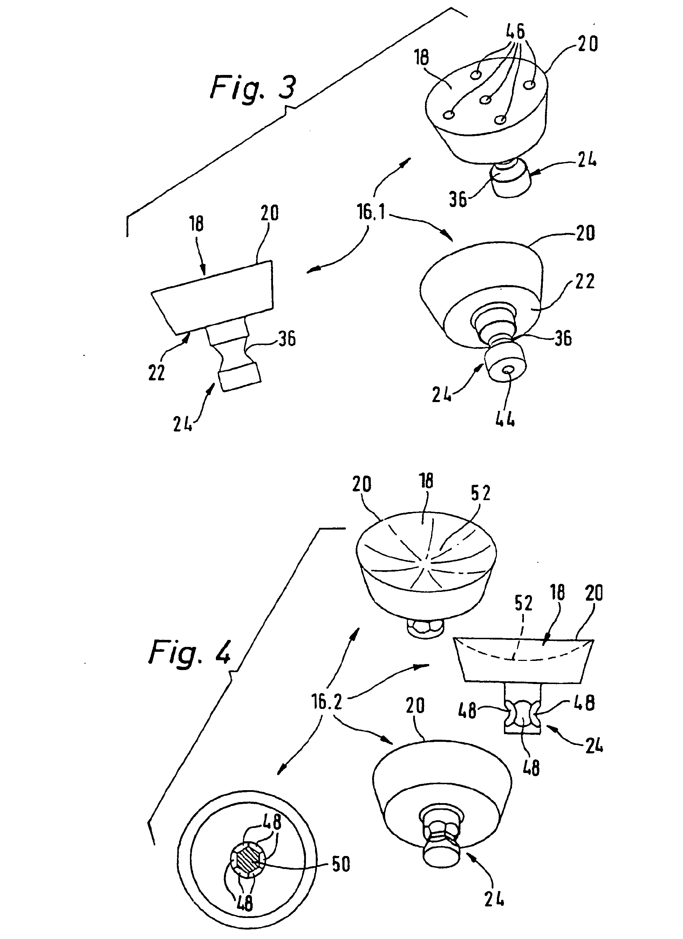

In der Figur 3 ist das Schneidelement 16.1 gemäß Figur in verschiedenen Ansichten dargestellt. In der Figur 3 sind die Öffnungen 46 gemäß der Figur 2b deutlich zu erkennen. Die Schneidkante 20 ist dabei als umlaufende, kreisrunde Schneidkante ausgebildet.

In der Figur 4 ist eine weitere Ausführungsform einer erfindungsgemäßen Schneideinlage 16.2 gezeigt, bei der am Bolzenabschnitt insgesamt sechs definierte Anlageabschnitte 48 für das freie Ende des Spannstifts vorgesehen sind. Die sechs Anlageabschnitte sind insbesondere der Darstellung deutlich zu entnehmen, in der ein Schnitt 50 senkrecht zur Längsachse des Bolzenabschnitts durch die Anlageabschnitte 48 gezeigt ist. Durch Vorsehen von sechs Anlageabschnitten kann die Schneideinlage 16.2 unter sechs verschiedenen Drehwinkeln am Grundkörper 12 angeordnet werden. Ist beispielsweise ein Abschnitt der Schneidkante abgenutzt, kann durch verdrehen der Schneideinlagen um ihre Längsachse ein anderer Schneidabschnitt zur Bearbeitung verwendet werden. Insofern kann die gesamte Schneidkante optimal ausgenutzt werden.

Die Schneideinlage 16.2 gemäß Figur 4 sieht außerdem an ihrer Oberseite 18 eine muldenartige Ausnehmung 52 vor. Die Ausnehmung 52 ist so gestaltet, dass eine optimale Spanabführung an der Schneidkante 20 gewährleistet werden kann.

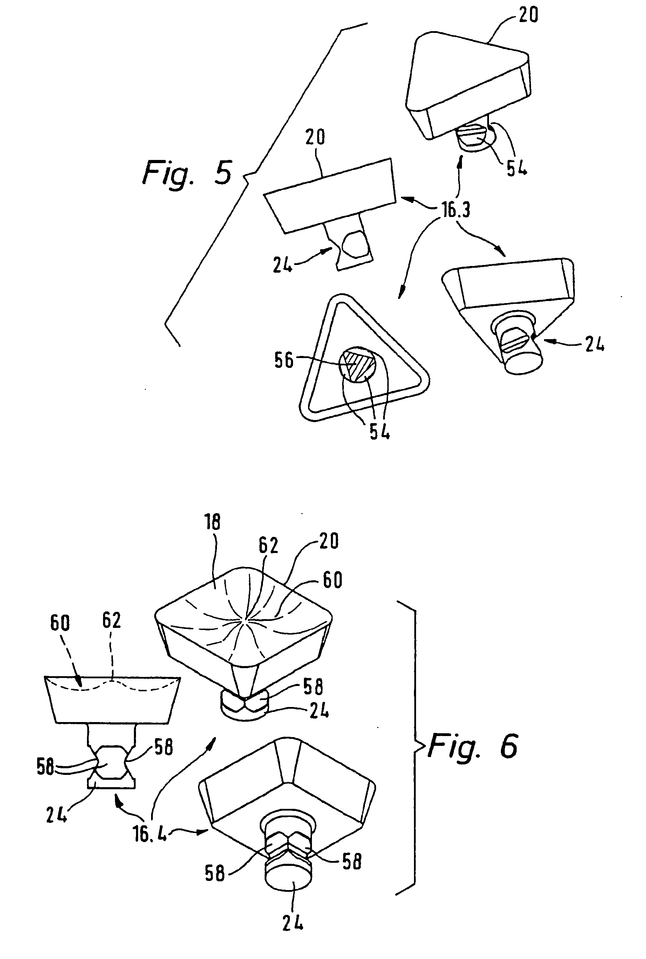

In der Figur 5 ist eine weitere erfindungsgemäße Schneideinlage 16.3 in verschiedenen Ansichten dargestellt. Die Schneidkante 20 ist hierbei in ihrer Draufsicht dreieckartig ausgebildet und sieht folglich drei Schneidkantenabschnitte vor. Entsprechend zu den drei Schneidkantabschnitten weist der Bolzenabschnitt 24 insgesamt drei Anlageabschnitte 54 auf, die im Schnitt 56 deutlich zu erkennen sind. Damit kann die Geometrie der Schneidkante 20 optimal ausgenutzt werden. Ist ein Schneidkantenabschnitt abgenutzt, kann die Schneideinlage 16.3 um 120°C so verdreht werden, dass der nächste Schneidkantenabschnitt zur Verfügung gestellt werden kann.

In der Figur 6 ist eine weitere erfindungsgemäße Schneideinlage 16.4 in verschiedenen Ansichten gezeigt. Die Schneidkante 20 dieser Schneideinlage 16.4 sieht insgelsamt 4 Schneidkantenabschnitte vor. Entsprechend sind am Bolzenabschnitt 24 insgesamt vier Anlageabschnitte 58 vorgesehen.

Die Oberseite 18 der Schneideinlage 16.4 sieht eine muldenartige Ausnehmung 60, die im zentralen Bereich eine Erhebung 62 aufweist. Auch hierdurch kann, je nach zu spanendem Material, eine optimale Spanabführung gewährleistet werden.

Erfindungsgemäß können auch andere, nicht gezeigte Geometrien an der Oberseite 18 der Schneideinlagen vorgesehen sein.

## Patentansprüche

1. Spanabhebendes Werkzeug (10), insbesondere Fräswerkzeug, mit einem Grundköper (12) und mit wenigstens einer an einem Aufnahmeabschnitt (14) des Grundkörpers (12) anordenbaren Schneideinlage (16), wobei die Schneideinlage (16) im Bereich ihrer Oberseite (18) eine Schneidkante (20) aufweist, wobei an der Unterseite (22) der Scheideinlage (16) ein Bolzenabschnitt (24) vorgesehen ist, der geradlinig und wenigstens weitgehend formschlüssig in eine grundköperseitige Bolzenaufnahme (26) einführbar ist und dass am Grundkörper (12) ein Spannstift (28) vorgesehen ist, mit dem der Bolzenabschnitt (24) quer oder schräg zu seiner Längsachse (30) in die Bolzenaufnahme (26) einspannbar ist, **dadurch gekennzeichnet, dass** am Grundkörper (12) ein Kanal (42) zur Führung von Kühl- und/oder Schmiermittel vorgesehen ist, der im Bereich des Aufnahmeabschnitts (14) für die Schneideinlage (16) und/oder im Bereich der Bolzenaufnahme (26) und/oder in axialer Verlängerung der Bolzenaufnahme (26) endet.

2. Spanabhebendes Werkzeug (10) nach Anspruch 1, **dadurch gekennzeichnet, dass** der Spannstift (28) ein Gewinde umfasst, welches in einen quer oder schräg zur Bolzenaufnahme (26) verlaufenden , sich in die Bolzenaufnahme (26) erstreckenden Gewindeabschnitt (32) einschraubbar ist.

3. Spanabhebendes Werkzeug nach Anspruch 1 oder 2, **dadurch gekennzeichnet, dass** die Bolzenaufnahme (26) einen runden, ovalen, elliptischen oder eckigen Querschnitt aufweist, und dass der Bolzenabschnitt (24) zur Bolzenaufnahme (26) komplementären Querschnitt aufweist.

4. Spanabhebendes Werkzeug (10) nach Anspruch 1, 2 oder 3,
**dadurch gekennzeichnet, dass** die Fertigungstoleranzen der Paarung Bolzenabschnitt (24) und Bolzenaufnahme (26) so gewählt sind, dass sie als Haftsitz-, Schiebesitz- oder Gleitsitzteile zusammenfügbar sind.

5. Spanabhebendes Werkzeug (10) nach einem der vorhergehenden Ansprüche, **dadurch gekennzeichnet, dass** der Aufnahmeabschnitt (14) derart ausgebildet ist, dass die Unterseite (22) und/oder Teile der Mantelfläche (38) der Scheideinlage (16) im am Grundkörper (12) montierten Zustand wenigstens weitgehend formschlüssig am Aufnahmeabschnitt (14) anliegen.

6. Spanabhebendes Werkzeug (10) nach einem der vorhergehenden Ansprüche, **dadurch gekennzeichnet, dass** die Schneideinlage (16) eine senkrecht zur Längsachse (30) verlaufende Unterseite (22) aufweist und dass an der Unterseite (22) der Bolzenabschnitt (24), der zylindrisch ausgebildete ist, angeordnet ist.

7. Schneideinlage (16, 16.1, 16.2, 16.3) für ein spanabhebendes Werkzeug nach einem der vorhergehenden Ansprüche, mit einer Schneidkante (20) im Bereich der Oberseite (18) und mit einem an der der Oberseite (18)abgewandten Unterseite (22) vorgesehenen Bolzenabschnitt (24) zum geradlinigen Einführen in eine grundköperseitige Bolzenaufnahme (26), **dadurch gekennzeichnet, dass** die Schneideinlage (16) einen Kanal (44, 44') zur Führung von Kühl- und/oder Schmiermittel aufweist.

8. Schneideinlage (16) nach Anspruch 7, **dadurch gekennzeichnet, dass** der Bolzenabschnitt (24) einen Anlagebereich (36, 48, 54, 58) zur wenigstens geringfügig formschlüssigen Anlage des freien Endes des Spannstifts (28) aufweist.

9. Schneideinlage (16) nach Anspruch 8, **dadurch gekennzeichnet, dass** der Anlagebereich (36) als rotationssymmetrische Einschnürung am Bolzenabschnitt (24) ausgebildet ist.

10. Schneideinlage (16) nach Anspruch 8, **dadurch gekennzeichnet, dass** der Anlagebereich zwei oder mehrere definierte Anlageabschnitte (48, 54, 58) für das freie Ende des Spannstifts (28) derart aufweist, dass die Schneideinlage (16) in zwei oder mehreren unterschiedlichen Drehwinkeln am Grundkörper (12) anordenbar ist.

11. Schneideinlage (16) nach Anspruch 10, **dadurch gekennzeichnet, dass** die Schneidkante (20) mehrere Schneidkantabschnitte aufweist und dass der Bolzenabschnitt (24) eine entsprechende Anzahl von Anlageabschnitten (48, 54, 58) aufweist.

12. Schneideinlage (16) nach einem der Ansprüche 7 bis 11, **dadurch gekennzeichnet, dass** die Schneideinlage (16) eine senkrecht zur Längsachse (30) verlaufende Unterseite (22) aufweist und dass an der Unterseite (22) der Bolzenabschnitt (24), der zylindrisch ausgebildete ist, angeordnet ist.

13. Schneideinlage (16) nach einem der Ansprüche 7 bis 12, **dadurch gekennzeichnet, dass** der Kanal (44) wenigstens teilweise entlang der Mittellängsachse (30) des Bolzenabschnitts (24) verläuft und an der Oberseite (18) der Schneideinlage endet.

14. Schneideinlage (16) nach einem der Ansprüche 7 bis 13, **dadurch gekennzeichnet, dass** sich der Kanal (44, 44')innerhalb der Schneideinlage verzweigt und mehrere Öffnungen (46) an der Oberseite (18) der Schneideinlage (16) angeordnet sind.

15. Schneideinlage (16) nach einem der Ansprüche 7 bis 14, **dadurch gekennzeichnet, dass** die Schneideinlage an ihrer Oberseite (18) eine den Span in vorteilhafter Weise abführende Oberflächengeometrie (52, 60, 62) aufweist.

## Claims

1. A cutting tool (10), in particular a milling tool, having a base body (12) and at least one cutting insert (16), which can be arranged at a receiving section (14) of the base body (12), wherein the cutting insert (16) has a cutting edge (20) in the area of its top (18), wherein a bolt section (24) is provided on the underside (22) of the cutting insert (16), which can be inserted in a straight line and in a positive manner, at least to a large degree, into a bolt receptacle (26) on the part of the base body, and that a clamping pin (28) is provided on the base body (12), by means of which the bolt section (24) can be clamped transversely or oblique in respect to its longitudinal axis (30) into the bolt receptacle (26), **characterized in that** a conduit (42) for conducting coolant and/or lubricant is provided on the base body (12), which terminates in the area of the receiving section (14) for the cutting insert (16) and/or in the area of the bolt receptacle (26) and/or in the axial extension of the bolt receptacle (26).

2. The cutting tool (10) in accordance with claim 1, **characterized in that** the clamping pin (28) comprises a screw thread which can be screwed into a threaded section (32) which runs transversely or obliquely in respect to the bolt receptacle (26) and extends into the threaded section (32).

3. The cutting tool (10) in accordance with claim 1 or 2, **characterized in that** the bolt receptacle (26) has a round, oval, elliptical or rectangular cross section, and that the bolt section (24) has a cross section complementary to that of the bolt receptacle (26).

4. The cutting tool (10) in accordance with claim 1, 2 or 3, **characterized in that** manufacturing tolerances of the pair consisting of the bolt section (24) and the bolt receptacle (26) are selected in such a way that they can be put together as adhesive seating elements, push-seating elements or sliding seating elements.

5. The cutting tool (10) in accordance with one of the preceding claims, **characterized in that** the receiving section (14) is embodied in such a way that, in the state in which they are mounted on the base body (12), the underside (22) and/or parts of the shell face (38) of the cutting insert (16) rest at least to a large extent in a positive manner against the receiving section (14).

6. The cutting tool (10) in accordance with one of the preceding claims, **characterized in that** the cutting insert (16) has an underside (22) extending perpendicularly in respect to the longitudinal axis (30), and that the bolt section (24), which is cylindrically designed, is arranged on the underside (22).

7. A cutting insert (16, 16.1, 16.2, 16.3) for a cutting tool in accordance with one of the preceding claims, having a cutting edge (20) in the area of the top (18), and having a bolt section (24) provided on the underside (22) in the area facing away from the top (18) for the straight insertion into a bolt receptacle (26) on the part of the base body, **characterized in that** the cutting insert (16) has a conduit (44, 44') for conducting coolant and/or lubricant.

8. The cutting insert (16) in accordance with claim 7, **characterized in that** the bolt section (24) has a contact section (36, 48, 54, 58) for the at least slightly positive contact of the free end of the clamping pin (2B) .

9. The cutting insert (16) in accordance with claim 8, **characterized in that** the contact area (36) is embodied as a rotationally symmetrical constriction on the bolt section (24).

10. The cutting insert (16) in accordance with claim 8, **characterized in that** the contact area has two or more defined contact sections (48, 54, 58) for the free end of the clamping pin (28) in such a way that the cutting insert (16) can be arranged on the base body (12) at two or several different angles of rotation.

11. The cutting insert (16) in accordance with claim 10, **characterized in that** the cutting edge (20) has several cutting edge sections, and that the bolt section (24) has a corresponding number of contact sections (48, 54, 58).

12. The cutting insert (16) in accordance with one of claims 7 to 11, **characterized in that** the cutting insert (16) has an underside (22), which extends perpendicularly in respect to the longitudinal axis (30), and that the bolt section (24), which is cylindrically designed, is arranged on the underside (22).

13. The cutting insert (16) in accordance with one of claims 7 to 12, **characterized in that** the conduit (44) extends at least partially along the center longitudinal axis (30) of the bolt section (24) and terminates at the top (18) of the cutting insert.

14. The cutting insert (16) in accordance with one of claims 7 to 13, **characterized in that** the conduit (44, 44') branches within the cutting insert, and several openings (46) are arranged on the top (18) of the cutting insert (16).

15. The cutting insert (16) in accordance with one of claims 7 to 14, **characterized in that** on its top (18), the cutting insert has a surface geometry (52, 60, 62), which carries off the chips in an advantageous manner.

## Revendications

1. Outil d'enlèvement de copeaux (10), en particulier outil de fraisage, comportant un corps de base (12) et au moins un insert de coupe (16) pouvant être disposé sur une section de logement (14) du corps de base (12), moyennant quoi l'insert de coupe (16) présente un bord de coupe (20) dans la zone de face supérieure (18), moyennant quoi, sur la face inférieure (22) de l'insert de coupe (16) est prévue une section de boulon (24), qui peut être introduite en ligne droite et au moins sensiblement par conjugaison de forme dans un logement de boulon (26) du côté du corps de base et en ce que, sur le corps de base (12) est prévue une goupille de serrage (28), grâce à laquelle la section de boulon (24) peut être serrée transversalement ou de manière oblique par rapport à son axe longitudinal (30) dans le logement de boulon (26), en ce que, sur le corps de base (12) est prévu un canal (42) permettant de guider des moyens refroidisseur et/ou de pression, lequel débouche dans la zone de la section de logement (14) destinée à l'insert de coupe (16) et/ou dans la zone du logement de boulon (26) et/ou dans le prolongement axial du logement de boulon (26).

2. Outil d'enlèvement de copeaux (10) selon la revendication 1, **caractérisé en ce que** la goupille de serrage (28) comporte un filetage, qui peut être enfoncé dans une section filetée (32) transversale ou oblique par rapport au logement de boulon (26), et s'étendant vers le logement de boulon (26).

3. Outil d'enlèvement de copeaux selon la revendication 1 ou 2, **caractérisé en ce que** le logement de boulon (26) présente une section ronde, ovale, elliptique ou carrée, et **en ce que** le logement de boulon (24) présente une section transversale complémentaire par rapport au logement de boulon (26).

4. Outil d'enlèvement de copeaux (10) selon la revendication 1, 2 ou 3, **caractérisé en ce que** les tolérances de fabrication de la paire section de boulon (24) et logement de boulon (26) sont choisies, de telle sorte qu'ils peuvent être assemblés sous la forme d'éléments ajustables par collage, appui ou glissement.

5. Outil d'enlèvement de copeaux (10) selon l'une quelconque des revendications précédentes, **caractérisé en ce que** la section de logement (14) est configurée de telle sorte que la face inférieure (22) et/ou les éléments de la surface d'enveloppe (38) de l'insert de coupe (16), à l'état monté sur le corps de base (12), reposent au moins sensiblement par conjugaison de forme sur la section de logement (14).

6. Outil d'enlèvement de copeaux (10) selon l'une quelconque des revendications précédentes, **caractérisé en ce que** l'insert de coupe (16) présente une face inférieure (22) perpendiculaire à l'axe longitudinal (30), et **en ce que**, sur la face inférieure (22) est disposée la section de boulon (24), configurée sous forme cylindrique.

7. Insert de coupe (16, 16.1, 16.2, 16.3) destiné à un outil d'enlèvement de copeaux selon l'une quelconque des revendications précédentes, comportant un bord de coupe (20) dans la zone de la face supérieure (18) et une section de boulon (24) prévue sur la face inférieure (22) opposée à la face supérieure (18), permettant l'introduction en ligne droite dans un logement de boulon (26) du côté du corps de base, **caractérisé en ce que** l'insert de coupe (16) présente un canal (44, 44') permettant de guider les moyens de refroidissement et/ou lubrifiants.

8. Insert de coupe (16) selon la revendication 7, **caractérisé en ce que** la section de boulon (24) présente une zone de positionnement (36, 48, 54, 58) permettant un positionnement au moins légèrement par conjugaison de forme de l'extrémité libre de la goupille de serrage (28).

9. Insert de coupe (16) selon la revendication 8, **caractérisé en ce que** la zone de positionnement (36) est configurée sous la forme d'une gorge symétrique en rotation sur la section de boulon (24).

10. Insert de coupe (16) selon la revendication 8, **caractérisé en ce que** la zone de positionnement présente deux zones de positionnement (48, 54, 58) définies ou plus pour l'extrémité libre de la goupille de serrage (28), de telle sorte que l'insert de coupe (16) peut être disposé sur le corps de base (12) selon deux angles de rotation différents ou plus.

11. Insert de coupe (16) selon la revendication 10, **caractérisé en ce que** le bord de coupe (20) présente plusieurs sections de bord de coupe, et **en ce que** la section de boulon (24) présente un nombre correspondant de sections de positionnement (48, 54, 58).

12. Insert de coupe (16) selon l'une quelconque des revendications 7 à 11, **caractérisé en ce que** l'insert de coupe (16) présente une face inférieure (22) perpendiculaire à l'axe longitudinal (30), et **en ce que**, sur la face inférieure (22) est disposée la section de boulon (24), qui est configurée sous forme cylindrique.

13. Insert de coupe (16) selon l'une quelconque des revendications 7 à 12, **caractérisé en ce que** le canal (44) s'étend au moins en partie le long de l'axe longitudinal médian (30) de la section de boulon (24) et débouche au niveau de la face supérieure (18) de l'insert de coupe.

14. Insert de coupe (16) selon l'une quelconque des revendications 7 à 13, **caractérisé en ce que** le canal (44, 44') se ramifie à l'intérieur de l'insert de coupe et plusieurs ouvertures (46) sont disposées sur la face supérieure (18) de l'insert de coupe (16).

15. Insert de coupe (16) selon l'une quelconque des revendications 7 à 14, **caractérisé en ce que** l'insert de coupe présente, sur sa face supérieure (18), une géométrie superficielle (52, 60, 62) évacuant les copeaux de manière avantageuse.
